# EUROPÄISCHE PATENTSCHRIFT

(11) **EP 2 631 448 B1**
(45) Veröffentlichungstag und Bekanntmachung des Hinweises auf die Patenterteilung: **23.11.2016**
(21) Anmeldenummer: 13000705.7
(22) Anmeldetag: 11.02.2013
(51) Int. Cl.: F02B 19/12, F02B 43/12, F02M 25/03

(54) **Verfahren zum Betreiben einer mit wenigstens einer gespülten Vorkammer versehenen Brennkraftmaschine**
Method for operating a combustion engine with at least one scoured pre-chamber
Procédé de fonctionnement d'un moteur à combustion doté d'au moins une préchambre rincée

(30) Priorität: 21.02.2012 AT 2172012
(43) Veröffentlichungstag der Anmeldung: 28.08.2013
(73) Patentinhaber: GE Jenbacher GmbH & Co OG, 6200 Jenbach (AT)
(72) Erfinder: Winter, Hubert, 8042 Graz (AT); Fimml, Wolfgang, 6200 Jenbach (AT); Schaumberger, Herbert, 6232 Münster (AT)
(74) Vertreter: Torggler & Hofinger Patentanwälte

(56) Entgegenhaltungen:
- JP-A- H06 229 318
- JP-A- H08 296 441
- JP-A- 2001 164 955
- JP-A- 2004 251 194

## Beschreibung

Die Erfindung betrifft ein Verfahren zum Betreiben einer mit wenigstens einer gespülten Vorkammer versehenen Brennkraftmaschine, wobei die wenigstens eine Vorkammer mit einem Hauptbrennraum der Brennkraftmaschine verbunden ist und wobei - während einer der Entflammung im Hauptbrennraum unmittelbar vorangehenden Kompressionsphase - nach erfolgter Entflammung in der Vorkammer in einer ersten Überströmphase Gas von der Vorkammer in den Hauptbrennraum überströmt, wobei während der Kompressionsphase ein wenigstens zweiphasiges, inkompressibles Medium - vorzugsweise Wasser - in die Vorkammer eingebracht wird.

Bei ottomotorisch betriebenen Brennkraftmaschinen, insbesondere bei Gasmotoren, bei denen ein Treibgas-Luft-Gemisch entzündet wird, setzt man bei größeren Brennraumvolumina das Magerkonzept ein. Dies bedeutet, dass ein relativ großer Luftüberschuss vorhanden ist, wodurch bei maximaler Leistungsdichte und gleichzeitig hohem Wirkungsgrad des Motors die Schadstoffemission sowie die thermische Belastung der Bauteile möglichst gering gehalten werden. Die Zündung und Verbrennung sehr magerer Treibstoff-Luft-Gemische stellt dabei eine erhebliche Herausforderung für die Entwicklung bzw. den Betrieb moderner Hochleistungsgasmotoren dar.

Ab einer gewissen Baugröße der Gasmotoren (meist etwa oberhalb von sechs Litern Hubraum) ist es erforderlich, Zündverstärker einzusetzen, um die entsprechend großen Flammwege in den Brennräumen der Zylinder in möglichst kurzer Zeit zu durchlaufen. Als solche Zündverstärker dienen üblicherweise Vorkammern, wobei das am Ende des Kompressionshubes hoch verdichtete Treibstoff-Luft-Gemisch in einem vom Hauptbrennraum des Zylinders abgeteilten relativ kleinen Nebenraum gezündet wird. Dabei wird ein Hauptbrennraum vom Arbeitskolben, der Zylinderlaufbuchse und dem Zylinderkopfboden begrenzt, wobei der Nebenraum (die Vorkammer) durch eine oder mehrere Überströmbohrungen mit dem Hauptbrennraum verbunden ist. Häufig werden solche Vorkammern während der Ladungswechselphase mit Treibgas gespült bzw. gefüllt, um das Treibstoff-Luft-Gemisch anzufetten und damit die Verflammungs- und Verbrennungseigenschaften zu verbessern. Dazu wird eine kleine Treibgasmenge von der Treibgaszuführung zum Hauptbrennraum abgezweigt und über eine geeignete, mit einem Rückschlagventil versehene Zufuhreinrichtung in die Vorkammer eingeleitet. Diese Treibgasmenge spült während des Ladungswechsels die Vorkammer und wird deshalb oft als Spülgas bezeichnet.

Während der Kompressionsphase strömt das sehr magere Treibstoff-Luft-Gemisch des Hauptbrennraumes durch die Überströmbohrungen in die Vorkammer und vermischt sich dort mit dem Spülgas. Das Verhältnis von Treibstoff zu Luft im Gemisch wird in Form der Luftüberschusszahl A angegeben. Eine Luftüberschusszahl von A = 1 bedeutet dabei, dass die im Gemisch vorhandene Luftmenge genau jener Menge entspricht, die erforderlich ist, um eine vollständige Verbrennung der Treibstoffmenge zu ermöglichen. Die Verbrennung erfolgt in einem solchen Fall stöchiometrisch. Große Gasmotoren werden bei Volllast üblicherweise mager bei einem A von ca. 1,9 bis 2,0 betrieben, das heißt die Luftmenge im Gemisch entspricht etwa der doppelten stöchiometrischen Luftmenge. Durch die Spülung der Vorkammer mit Treibgas ergibt sich nach Vermischung mit dem Treibgas-Luft-Gemisch aus dem Hauptbrennraum ein mittleres A in der Vorkammer von ca. 0,8 bis 0,9. Damit ergeben sich optimale Entflammungsbedingungen und aufgrund der Energiedichte intensive, in den Hauptbrennraum austretende Zündfackeln, die zu einem raschen Durchbrennen des Treibstoff-Luft-Gemischs im Hauptbrennraum führen. Bei solchen A-Werten erfolgt die Verbrennung allerdings auf maximalem Temperaturniveau, sodass auch die Wandtemperaturen im Vorkammerbereich entsprechend hoch sind. Daraus resultieren einerseits eine entsprechend hohe thermische Belastung der Vorkammer und der darin angeordneten Bauteile (z.B. Zündkerze, Ventile) und andererseits unerwünscht hohe Stickoxidemissionen.

Aus der JP 07-127453 ist es bereits bekannt, in eine Vorkammer Wasser einzudüsen, um durch die damit verbundene Temperaturreduktion die Stickoxidemissionen zu senken. Nachteilig hierbei ist, dass das Wasser vor oder bei der Zündung in der Vorkammer eingespritzt wird, wodurch die Leistung der Vorkammer als Zündverstärker herabgesetzt wird.

Die JP2001164955 zeigt ein Verfahren worin zur Kühlung der in einer Vorkammer angeordneten Zündeinrichtung Wasser in die Vorkammer eingedüst wird. Die Eindüsung kann gemäß der Schrift im Ansaugtakt, im Verdichtungstakt oder im Ausstoßtakt erfolgen. Nachteilig hieran ist, dass eine Eindüsung wie in der JP2001164955 gezeigt die Zündkerze thermisch stark belastet. Eine homogene Verteilung des Mediums ist nicht gewährleistet.

Aufgabe der Erfindung ist es, ein verbessertes Verfahren zum Betreiben einer Brennkraftmaschine anzugeben, bei dem die in der Vorkammer und durch die Vorkammer gebildeten Stickoxide reduziert werden und die Leistung der Vorkammer als Zündverstärker nicht gemindert werden.

Diese Aufgabe wird erfindungsgemäß dadurch gelöst, dass das Medium nach der ersten Überströmphase eingebracht wird wobei die Vorkammer mit dem Hauptbrennraum über einen Überströmkanal verbunden ist, wobei das Medium über wenigstens einen in den Überströmkanal einmündenden Einspritzkanal eingebracht wird. Dadurch werden automatisch die vorherrschenden Druckverhältnisse vorteilhaft ausgenutzt und in jeder zweiten Überströmphase während des Einbringens des Mediums wird dieses automatisch in die Vorkammer geschoben. Durch die Verdampfung des Mediums entsteht im Überströmkanal ein Verdampfungspolster, der als Barriere dem rückströmenden Gas aus dem Hauptbrennraum entgegensteht. Dies führt zu einer weiteren Reduktion der Stickoxidbildung.

Da die Entstehung von Stickoxiden zu einem Gutteil nach der eigentlichen Verbrennung erfolgt, ist es ein Ziel der Erfindung, die Temperatur des verbrannten Gases abzusenken. Daher wird nach der Entflammung in der Vorkammer und nach der ersten Überströmphase und gegebenenfalls noch vor der Entflammung im Hauptbrennraum in demselben Verbrennungszyklus ein wenigstens zweiphasiges Medium, vorzugsweise in dessen flüssigem Zustand, in die Vorkammer eingebracht.

Vorzugsweise handelt es sich bei dem Medium um Wasser, das in die Vorkammer eingespritzt wird. Durch die Verdampfung des Mediums bzw. des Wassers in der Vorkammer wird der Inhalt der Vorkammer gekühlt, wodurch weniger Stickoxide entstehen.

Dadurch, dass das Medium erst nach der ersten Überströmphase in die Vorkammer eingebracht wird, ist die Leistung der Vorkammer als Zündverstärker nicht beeinträchtigt, d.h. die Entflammung in der Vorkammer und auch im Hauptbrennraum kann bei den herkömmlichen hohen Temperaturen und damit auch mit der herkömmlichen Zündenergie erfolgen. Dadurch, dass das Medium erst nach der Entflammung in der Vorkammer eingebracht wird, sind darüber hinaus auch nur verhältnismäßig geringe Mengen des Mediums nötig, um eine entsprechende Abkühlung und dadurch eine entsprechende Reduktion der Stickoxidemissionen zu erzielen.

Gemäß einer bevorzugten Ausführungsvariante kann vorgesehen sein, dass das Medium vor Erreichen des Druckmaximums im Hauptbrennraum in die Vorkammer eingebracht wird. Das Druckmaximum im Hauptbrennraum wird nach Überschreiten des oberen Totpunkts eines den Hauptbrennraum begrenzenden Kolbens erreicht. Durch die vorherrschenden Druckverhältnisse in der Vorkammer und im Hauptbrennraum während des Zeitfensters zwischen der ersten Überströmphase und dem Erreichen des Druckmaximums im Hauptbrennraum ist das Einbringen des Mediums in die Vorkammer in diesem Zeitfenster besonders vorteilhaft. Während dieses Zeitfensters wird durch die Kompression mittels Zylinder im Hauptbrennraum zumindest zeitweise rückströmendes Gas vom Hauptbrennraum in die Vorkammer geschoben. Besonders günstig ist also, wenn in wenigstens einer zweiten Überströmphase rückströmendes Gas vom Hauptbrennraum in die Vorkammer zurückströmt, wobei das Medium zumindest zeitweise während der wenigstens einen zweiten Überströmphase eingebracht wird.

Verbrennungsvorgänge in einer Brennkraftmaschine werden oftmals abhängig von der Kurbelwellenstellung bzw. abhängig vom Kurbelwinkel gesteuert. Dementsprechend kann bei einer vorteilhaften Ausgestaltung des vorgeschlagenen Verfahrens vorgesehen sein, dass das Medium in einem Kurbelwinkelbereich von etwa 15 Grad Kurbelwinkel vor einem oberen Totpunkt eines den Hauptbrennraum begrenzenden Kolbens bis etwa 10 Grad Kurbelwinkel nach dem oberen Totpunkt des den Hauptbrennraum begrenzenden Kolbens eingebracht wird.

Gemäß einer besonders bevorzugten Ausführung kann vorgesehen sein, dass das Medium mit einem Druck von mindestens 100 bar, vorzugsweise etwa 200 bar, eingebracht wird. Bei hohen Lasten können in den Brennräumen (Hauptbrennraum und Vorkammer) Zylinderdrücke von etwa 30 bar bis 70 bar vorherrschen. Durch einen entsprechend hohen Einspritzdruck kann sichergestellt werden, dass das Medium trotz dieser hohen Zylinderdrücke in die Vorkammer eingebracht werden kann.

Weitere Einzelheiten und Vorteile der vorliegenden Erfindung werden anhand der nachfolgenden Figurenbeschreibung erläutert. Dabei zeigt bzw. zeigen:
- Fig. 1: Druckverläufe in Vorkammer und Hauptbrennraum einer Brennkraftmaschine abhängig vom Kurbelwinkel im Bereich des oberen Totpunkts eines den Hauptbrennraum begrenzenden Kolbens,
- Fig. 2: eine Vorkammer mit einer vorgeschlagenen Wassereinspritzung und
- Fig. 3: eine vergrößerte Ansicht eines Detailbereichs der Fig. 2.

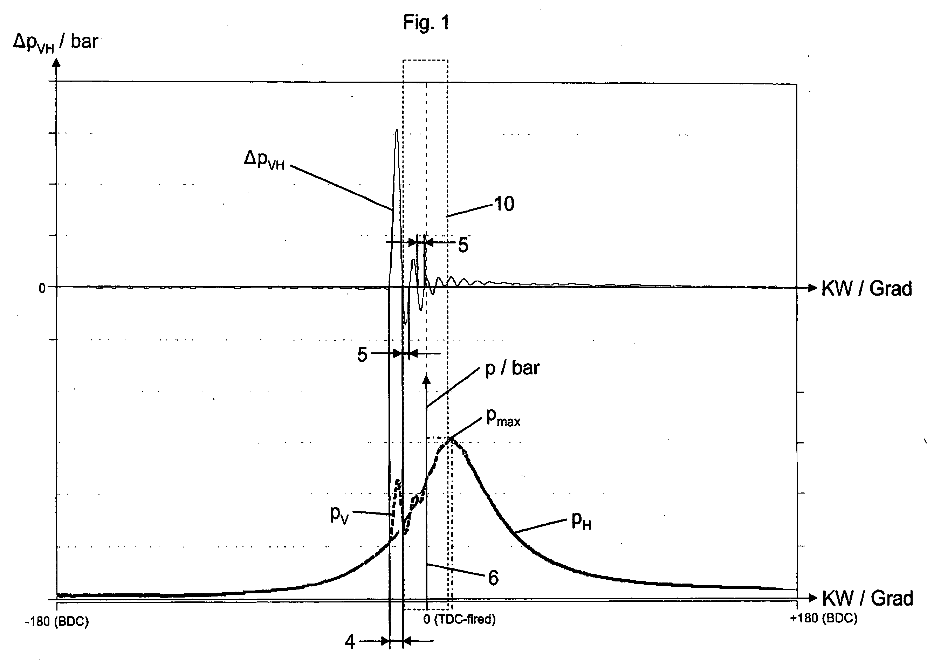

Fig. 1 zeigt zwei Diagramme. Das obere Diagramm zeigt den Verlauf eines Differenzdrucks Δp_{VH} in Abhängigkeit vom Kurbelwinkel KW. Die Differenzdruck Δp_{VH} ist dabei als Differenz zwischen dem Druck p_{V} in der Vorkammer und dem Druck p_{H} im Hauptbrennraum anzusehen. Der dargestellte Kurbelwinkelbereich KW erstreckt sich über einen vollständigen Kompressionstakt und einen vollständigen Expansionstakt eines ottomotorisch betriebenen fremdgezündeten Gasmotors, beginnend im unteren Totpunkt BDC eines den Hauptbrennraum 3 begrenzenden Kolbens 7 (-180 Grad Kurbelwinkel KW) und ebenso endend im unteren Totpunkt BDC des Kolbens 7 (+180 Grad Kurbelwinkel KW). Strichliert eingezeichnet ist auch der obere Totpunkt 6 (TDC) des den Hauptbrennraum 3 begrenzenden Kolbens 7 (0 Grad Kurbelwinkel KW).

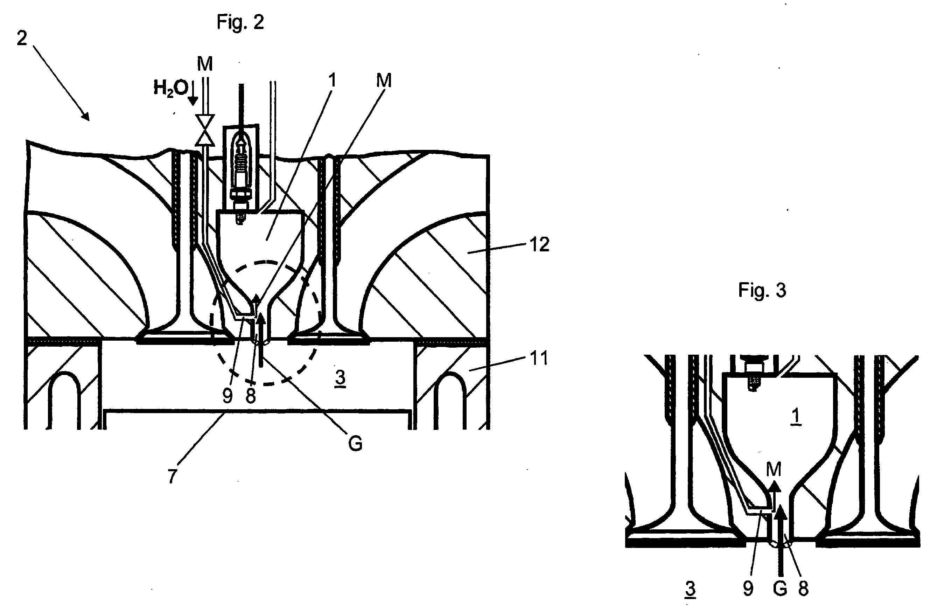

Das untere Diagramm der Fig. 1 zeigt die absoluten Druckverläufe des Vorkammerdrucks pᵥ und des Drucks p_{H} im Hauptbrennraum. Während des mit dem Bezugszeichen 4 bezeichneten Bereichs (erste Überströmphase 4) erfolgt die Entflammung in der Vorkammer 1 (z.B. durch einen Zündfunken einer Zündkerze), wodurch sich der Druck p_{V} in der Vorkammer 1 durch das expandierende Gas stärker erhöht als der durch die Kompression mittels Kolben 7 ebenfalls steigende Druck p_{H} im Hauptbrennraum 3. Wie dem Differenzdruckverlauf Δp_{VH} zu entnehmen ist, herrscht während dieses Kurbelwinkelbereichs 4 (erste Überströmphase 4) ein Überdruck in der Vorkammer 1 bezogen auf den Hauptbrennraum 3. Dadurch werden das entzündete Brennstoff-Luftgemisch und die dabei entstehenden Zündfackeln von der Vorkammer 1 über einen oder mehrere Überströmkanäle 8 in den Hauptbrennraum 3 gedrückt (siehe Fig. 2).

Im vorgeschlagenen Verfahren wird nun nach dieser ersten Überströmphase 4 ein wenigstens zweiphasiges, inkompressibles Medium M - vorzugsweise Wasser - in die Vorkammer 1 eingebracht, um den Inhalt der Vorkammer 1 abzukühlen und dementsprechend die Entstehung von Stickoxiden zu reduzieren. Durch die vorherrschenden Druckverhältnisse p_{V}, p_{H} in der Vorkammer 1 und im Hauptbrennraum 3 bildet bzw. bilden sich nach der ersten Überströmphase 4 eine oder mehrere zweite Überströmphasen 5, während der bzw. während denen rückströmendes Gas G vom Hauptbrennraum 3 in die Vorkammer 1 zurückgeschoben wird. Diese zweiten Überströmphasen 5 sind insbesondere dafür geeignet, das Medium M bzw. das Wasser in die Vorkammer 1 einzubringen, da in diesen zweiten Überströmphasen 5 die Strömung des rückströmenden Gases G in Richtung der Vorkammer 1 erfolgt. Spätestens nach Erreichen des Druckmaximums pₘₐₓ im Hauptbrennraum 3 sind die Druckverhältnisse p_{V}, p_{H} jedoch derart, dass keine Rückströmung mehr in die Vorkammer 1 erfolgt. Daher ist der günstigste Bereich zum Einbringen des Mediums M bzw. des Wassers in die Vorkammer 1 nach dem Ende der ersten Überströmphase 4 und vor dem Erreichen des Druckmaximums pₘₐₓ im Hauptbrennraum 3. Dieser günstige Einspritzbereich ist in der Fig. 1 mit einem strichlierten Rechteck markiert und mit dem Bezugszeichen 10 versehen.

Anzumerken ist, dass die in Fig. 1 gezeigten Diagramme die entsprechenden Druckverläufe ohne die vorgeschlagene Einbringung eines wenigstens zweiphasigen Mediums M in die Vorkammer 1 zeigen. Wird gemäß vorgeschlagenem Verfahren ein Medium M bzw. Wasser in einer zweiten Überströmphase 5 eingebracht bzw. eingespritzt, so sinkt durch das Verdampfen des Mediums M in der Vorkammer 1 und die damit verbundene Kühlung des Vorkammerinhalts der Druck p_{V} in der Vorkammer 1, wodurch ein zusätzliches Druckgefälle in Richtung der Vorkammer 1 entsteht. Die sich ergebenden Druckverhältnisse p_{V}, p_{H} begünstigen also das Einbringen des Mediums M in die Vorkammer 1 zusätzlich.

Fig. 2 zeigt eine Vorkammer 1 einer Brennkraftmaschine 2. Die Vorkammer 1 ist in diesem Beispiel über einen Überströmkanal 8 mit einem Hauptbrennraum 3 der Brennkraftmaschine 2 verbunden, sodass sich insgesamt ein verbundenes Volumen umfassend das Vorkammervolumen und das Hauptbrennraumvolumen ohne dazwischen angeordnetes Ventil ergibt. Der Hauptbrennraum 3 wird in dieser Darstellung seitlich durch eine Zylinderlaufbuchse 11, oben durch den Boden eines Zylinderkopfs 12 und unten durch die Stirnfläche des Kolbens 7 begrenzt. In den Überströmkanal 8 mündet ein Einspritzkanal 9, durch den ein Medium M - vorzugsweise Wasser - gemäß dem vorgeschlagenen Verfahren in die Vorkammer 1 eingebracht bzw. eingespritzt werden kann. Dieser Einspritzkanal 9 kann zusätzlich generell auch als Kühlkanal für die Vorkammer 1 angesehen werden.

Fig. 3 zeigt den mit einem Kreis markierten Bereich der Fig. 2 in einer vergrößerten Darstellung. In dieser Darstellung befindet sich die betrachtete Vorkammer 1 der Brennkraftmaschine 2 in einer zweiten Überströmphase 5 (siehe Fig. 1). Hierbei wird durch die vorherrschenden Druckverhältnisse p_{V}, p_{H} in der Vorkammer 1 und im Hauptbrennraum 3 rückströmendes Gas G vom Hauptbrennraum 3 in die Vorkammer 1 geschoben. Während einer solchen zweiten Überströmphase 5 wird günstigerweise das Medium M bzw. Wasser über den Einspritzkanal 9 in den Überströmkanal 8 eingebracht, wodurch es in weiterer Folge in die Vorkammer 1 gelangt und dort zu einer Kühlung des Vorkammerinhalts führen kann. Vorzugsweise wird dabei das Medium M bzw. das Wasser mit einem Druck von mindestens 100 bar, vorzugsweise etwa 200 bar, eingespritzt. Generell können pro Verbrennungszyklus und Vorkammer 1 etwa 2 mm³ bis etwa 5 mm³ Medium M bzw. Wasser eingebracht werden.

An der Einmündung des Einspritzkanals 9 in den Überströmkanal 8 kann auch ein Rückhalteventil angeordnet sein, das sich beispielsweise erst bei einer Druckdifferenz von etwa 10 bar bis 20 bar zwischen dem Druck im Einspritzkanal 9 und dem Druck im Überströmkanal 8 öffnet, um das Medium M bzw. das Wasser in den Überströmkanal 8 einzubringen. Es kann auch vorgesehen sein, dass an der Einmündung des Einspritzkanals 9 in den Überströmkanal 8 eine Düse angeordnet ist, durch die das Medium M bzw. das Wasser in den Überströmkanal 8 eingedüst werden kann. Durch das Einbringen des Mediums M bzw. des Wassers in den Überströmkanal 8 kann zusätzlich das Einbringen von verbrannten Gasen aus dem Hauptbrennraum 3 in die Vorkammer 1 verringert werden. Durch die Verdampfung des Mediums M kann im Überströmkanal 8 ein Verdampfungspolster entstehen, der als Barriere dem rückströmenden Gas aus dem Hauptbrennraum 3 entgegensteht. Dies führt zu einer weiteren Reduktion der Stickoxidbildung.

## Patentansprüche

1. Verfahren zum Betreiben einer mit wenigstens einer gespülten Vorkammer (1) versehenen Brennkraftmaschine (2), wobei die wenigstens eine Vorkammer (1) mit einem Hauptbrennraum (3) der Brennkraftmaschine (2) verbunden ist und wobei - während einer der Entflammung im Hauptbrennraum (3) unmittelbar vorangehenden Kompressionsphase - nach erfolgter Entflammung in der Vorkammer (1) in einer ersten Überströmphase (4) Gas von der Vorkammer (1) in den Hauptbrennraum (3) überströmt, wobei während der Kompressionsphase ein wenigstens zweiphasiges, inkompressibles Medium (M) - vorzugsweise Wasser - in die Vorkammer (1) eingebracht wird, wobei das Medium (M) nach der ersten Überströmphase (4) eingebracht wird wobei die Vorkammer (1) mit dem Hauptbrennraum (3) über einen Überströmkanal (8) verbunden ist, **dadurch gekennzeichnet, dass** das Medium (M) über wenigstens einen in den Überströmkanal (8) einmündenden Einspritzkanal (9) eingebracht wird.

2. Verfahren nach Anspruch 1, **dadurch gekennzeichnet, dass** das Medium (M) vor Erreichen des Druckmaximums pₘₐₓ im Hauptbrennraum (3) in die Vorkammer (1) eingebracht wird.

3. Verfahren nach einem der Ansprüche 1 oder 2, **dadurch gekennzeichnet, dass** in wenigstens einer zweiten Überströmphase (5) rückströmendes Gas (G) vom Hauptbrennraum (3) in die Vorkammer (1) zurückströmt, wobei das Medium (M) zumindest zeitweise während der wenigstens einen zweiten Überströmphase (5) eingebracht wird.

4. Verfahren nach einem der Ansprüche 1 bis 3, **dadurch gekennzeichnet, dass** das Medium (M) in einem Kurbelwinkelbereich von etwa 15 Grad Kurbelwinkel (KW) vor einem oberen Totpunkt (6) eines den Hauptbrennraum (3) begrenzenden Kolbens (7) bis etwa 10 Grad Kurbelwinkel (KW) nach dem oberen Totpunkt (6) des den Hauptbrennraum (3) begrenzenden Kolbens (7) eingebracht wird.

5. Verfahren nach einem der Ansprüche 1 bis 4, **dadurch gekennzeichnet, dass** das Medium (M) mit einem Druck von mindestens 100 bar, vorzugsweise etwa 200 bar, eingebracht wird.

## Claims

1. A method of operating a combustion engine (2) provided with at least one flushed prechamber (1), wherein the at least one prechamber (1) is connected to a main combustion chamber (3) of the combustion engine (2) and wherein - during a compression phase immediately preceding the ignition in the main combustion chamber (3) - after ignition has taken place in the prechamber (1), in a first transfer phase (4) gas transfers from the prechamber (1) into the main combustion chamber (3), wherein after the first transfer phase (4) an at least two-phase, incompressible medium (M) - preferably water - is introduced into the prechamber (1), wherein the prechamber (1) is connected to the main combustion chamber (3) via a transfer channel (8), **characterized in that** the medium (M) is introduced via at least one injection channel (9) opening into the transfer channel (8).

2. The method as claimed in claim 1, wherein the medium (M) is introduced into the prechamber (1) before the maximum pressure pₘₐₓ is reached in the main combustion chamber (3).

3. The method as claimed in any one of claims 1 to 2, wherein in at least one second transfer phase (5), backflowing gas (G) flows back from the main combustion chamber (3) into the prechamber (1), wherein the medium (M) is introduced at least for a time during the at least one second transfer phase (5).

4. The method as claimed in any one of claims 1 to 3, wherein the medium (M) is introduced in a range of crankshaft angle from about 15 degrees of crankshaft angle (CA) before a top dead center (6) of a piston (7) delimiting the main combustion chamber (3) to about 10 degrees of crankshaft angle (CA) after the top dead center (6) of the piston (7) delimiting the main combustion chamber (3).

5. The method as claimed in any one of claims 1 to 4, wherein the medium (M) is introduced at a pressure of at least 100 bar, preferably about 200 bar.

## Revendications

1. Procédé destiné au fonctionnement d'un moteur à combustion (2) équipé d'au moins une chambre de précombustion (1) purgée, où l'au moins une chambre de précombustion (1) est reliée à une chambre de combustion principale (3) du moteur à combustion (2) et où - pendant une phase de compression précédant immédiatement l'allumage dans la chambre de combustion principale (3) - du gaz est submergé, dans une première phase d'échappement (4), depuis la chambre de précombustion (1) dans la chambre de combustion principale (3) après la réussite de l'allumage dans la chambre de précombustion (1), où lors de la phase de compression, un milieu (M) incompressible à au moins deux phases - de préférence de l'eau - est alimenté dans la chambre de précombustion (1), où le milieu (M) est alimenté après la première phase de transfert (4), où la chambre de précombustion (1) est reliée à la chambre de combustion principale (3) par l'intermédiaire d'un canal de déversement (8), **caractérisé en ce que** le milieu (M) est alimenté par l'intermédiaire d'au moins un canal d'injection (9) débouchant dans le canal de déversement (8).

2. Procédé selon la revendication 1, **caractérisé en ce que** le milieu (M) est alimenté dans la chambre de précombustion (1) avant que la valeur maximale de pression pₘₐₓ ne soit atteinte dans la chambre de combustion principale (3).

3. Procédé selon l'une des revendications 1 ou 2, **caractérisé en ce que** du gaz (G) refoulé reflue depuis la chambre de combustion principale (3) dans la chambre de précombustion (1) lors d'au moins une deuxième phase d'échappement (5), le milieu (M) étant alimenté, tout au moins temporairement, pendant au moins une deuxième phase d'échappement (5).

4. Procédé selon l'une des revendications 1 à 3, **caractérisé en ce que** le milieu (M) est alimenté dans un secteur angulaire du vilebrequin, depuis un angle de vilebrequin (KW) d'environ 15 degrés, devant un point mort (6) supérieur d'un piston (7) délimitant la chambre de combustion principale (3), jusqu'à un angle de vilebrequin (KW) d'environ 10 degrés après le point mort (6) supérieur du piston (7) délimitant la chambre de combustion principale (3).

5. Procédé selon l'une des revendications 1 à 4, **caractérisé en ce que** le milieu (M) est alimenté par une pression d'au moins 100 bars, de préférence d'environ 200 bars.
